(19) Europäisches Patentamt
European Patent Office
Office européen des brevets

(11) EP 4 550 558 A1

(12) EUROPEAN PATENT APPLICATION

(43) Date of publication:
**07.05.2025 Bulletin 2025/19**

(21) Application number: **24209660.0**

(22) Date of filing: **29.10.2024**

(51) International Patent Classification (IPC):
***H01M 50/446*** *(2021.01)* ***H01M 10/052*** *(2010.01)*
***H01M 50/403*** *(2021.01)* ***H01M 50/42*** *(2021.01)*
***H01M 50/429*** *(2021.01)* ***H01M 50/431*** *(2021.01)*
***H01M 50/443*** *(2021.01)* ***H01M 50/449*** *(2021.01)*

(52) Cooperative Patent Classification (CPC):
**H01M 10/052; H01M 50/403; H01M 50/42; H01M 50/4295; H01M 50/431; H01M 50/443; H01M 50/446; H01M 50/449**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.11.2023 KR 20230150437**

(71) Applicants:
- **SK Innovation Co., Ltd.**
  **Seoul 03188 (KR)**
- **SK ie technology Co., Ltd.**
  **Jongno-gu**
  **Seoul**
  **03188 (KR)**

(72) Inventors:
- **LEE, Chang Hee**
  **34124 Daejeon (KR)**
- **KIM, Sang Hoon**
  **34124 Daejeon (KR)**
- **JI, Sang Yoon**
  **34124 Daejeon (KR)**

(74) Representative: **Prüfer & Partner mbB**
**Patentanwälte · Rechtsanwälte**
**Sohnckestraße 12**
**81479 München (DE)**

# (54) SEPARATOR, METHOD FOR MANUFACTURING THE SAME, AND ELECTROCHEMICAL DEVICE INCLUDING SEPARATOR

(57) Provided are a separator, a method for manufacturing the same, and an electrochemical device including the separator. According to an exemplary embodiment of the present disclosure, a separator including: a porous substrate; and an inorganic particle layer which is formed on at least one surface of the porous substrate and includes a binder and inorganic particles, wherein the binder includes a first water-soluble polymer including a metal carboxylate group and a second water-soluble polymer based on (meth)acrylamide, is provided.

EP 4 550 558 A1

## Description

### TECHNICAL FIELD

The following disclosure relates to a novel separator which may effectively inhibit an electrolyte decomposition reaction to improve performance of an electrochemical device, a method for manufacturing the same, and an electrochemical device including the separator.

### BACKGROUND

In recent years, as an environmentally friendly technology rapidly increases in demand, research on various energy sources is being intensively conducted. As the energy source as such, a lithium secondary battery is being used usefully as a power supply for mobile devices such as smart phones and laptops or electric vehicles, due to its advantages of high energy density and small self-discharge.

The lithium secondary battery uses an electrolyte including a lithium salt and a non-aqueous solvent, and the non-aqueous solvent requires to have high permittivity for dissolving a lithium salt and high ion conductivity in a large temperature range.

In order to satisfy the demand, a mixture of cyclic carbonates represented by propylene carbonate, ethylene carbonate and similar or equivalent cyclic carbonates, and linear carbonates represented by dimethyl carbonate, diethyl carbonate and similar or equivalent linear carbonates is used as the non-aqueous solvent.

However, though the electrolyte including a lithium salt and a carbonate-based mixed solvent as such shows excellent battery performance due to ion conductivity, the electrolyte has a limitation to hydrolysis by reaction with a trace of moisture present in the electrolyte. In addition, decomposition products occurring during a hydrolysis process, such as HF and $PO_3F^{2-}$, serve as a catalyst of a decomposition reaction, and also, affects corrosion of an active material to cause a decreased capacity of a battery and battery swelling due to gassing.

A general solution for inhibiting electrolyte decomposition is introducing an electrolyte additive. However, the electrolyte additives as such are sensitive to moisture and difficult to store, are expensive, and are in the form of being dissolved in the electrolyte and may adversely affect cell performance. As an example, U.S. Patent Publication No. 2019-0386338 discloses a lithium secondary battery using a certain alkali metal salt as the electrolyte additive.

However, since the electrolyte additive in the form of being dissolved in the electrolyte as such inevitably adversely affects cell performance, research on a lithium secondary battery which may inhibit an electrolyte decomposition reaction more effectively is needed.

### SUMMARY

An embodiment of the present disclosure is directed to providing a separator which may effectively inhibit an electrolyte decomposition reaction to improve performance of an electrochemical device, a method for manufacturing the same, and an electrochemical device including the separator. A further embodiment is directed to the use of a combined binder material.

Another embodiment of the present disclosure is directed to providing a separator which significantly inhibits the electrolyte decomposition reaction and also has excellent heat resistance and adhesion.

Specifically, another embodiment of the present disclosure is directed to providing a new separator inhibiting electrolyte decomposition when being assembled into a battery, which includes a porous substrate and an inorganic particle layer, and a method for manufacturing the same. The inorganic particle layer includes a binder and inorganic particles. The inorganic particle layer may have pores formed between inorganic particles by the inorganic particles being connected to each other.

Still another embodiment of the present disclosure is directed to providing a new separator which may improve performance of an electrochemical device by effectively inhibiting an electrolyte decomposition reaction inside a battery by action of a binder, by designing the binder which connects and fixes inorganic particles to each other in an inorganic particle layer of the separator, when manufacturing a battery using the separator, a method for manufacturing the same, and an electrochemical device including the separator.

In one general aspect, a separator includes: a porous substrate; and an inorganic particle layer which is formed on at least one surface of the porous substrate and which includes a binder and inorganic particles, wherein the binder includes a first water-soluble polymer including a metal carboxylate group and a second water-soluble polymer based on (meth)acrylamide.

Generally, the first water-soluble polymer including a metal carboxylate group and the second water-soluble polymer based on (meth)acrylamide may be a homopolymer or a copolymer, respectively.

In the present disclosure, the first water-soluble polymer including a metal carboxylate group may be defined by

using a polymer or copolymer in which a metal carboxylate group is present or introduced as appropriate polymer unit(s) or polymerization unit(s) respectively bearing the metal carboxylate group.

In the present disclosure, the second water-soluble polymer based on (meth)acrylamide may be a homopolymer or a copolymer in which a (meth)acryamide is present as polymer unit(s) or has been used as polymerization unit(s).

In the separator according to an exemplary embodiment, the first water-soluble polymer may be any one or more selected from the group consisting of polyacrylic acid metal salts, carboxymethyl cellulose metal salts, and alginic acid metal salts, and the metal may include alkali metals, alkaline earth metals, or combinations thereof.

In the separator according to an exemplary embodiment, the first water-soluble polymer may have a weight average molecular weight of 2,000 to 100,000 g/mol.

In the separator according to an exemplary embodiment, the separator may include 1 to 20 parts by weight of the first water-soluble polymer with respect to 100 parts by weight of the inorganic particles. Preferably, the separator may include 1 to 10 parts by weight of the first water-soluble polymer is included with respect to 100 parts by weight of the inorganic particles.

In the separator according to an exemplary embodiment, the second water-soluble polymer may include poly(meth)acrylamide or a copolymer including the same.

In the separator according to an exemplary embodiment, the copolymer may be a copolymer based on one, two, or three monomer polymerization unit(s), which respectively are selected from the group consisting of a (meth)acrylamide-based monomer polymerization unit; a hydroxyl group-containing (meth)acrylate-based monomer polymerization unit, and a polyfunctional (meth)acrylamide-based monomer polymerization unit, or a combination thereof. The copolymer preferably includes, or is based on, a (meth)acrylamide-based monomer polymerization unit; or the copolymer includes a (meth)acrylamide-based monomer polymerization unit and a hydroxyl group-containing (meth)acrylate-based monomer polymerization unit; or the copolymer includes a (meth)acrylamide-based monomer polymerization unit, a hydroxyl group-containing (meth)acrylate-based monomer polymerization unit and a polyfunctional (meth)acrylamide-based monomer polymerization unit.

In the separator according to an exemplary embodiment, the second water-soluble polymer may have a weight average molecular weight of 100,000 to 2,000,000 g/mol.

In the separator according to an exemplary embodiment, the separator may include 0.1 to 10 parts by weight of the second water-soluble polymer with respect to 100 parts by weight of the inorganic particles.

In the separator according to an exemplary embodiment, the separator may have heat shrinkage rates in MD and TD of 2% or less as measured after being allowed to stand at 150°C for 60 minutes.

In another general aspect, a method for manufacturing a separator includes: (S1) preparing a slurry composition including a binder and inorganic particles; and (S2) applying the slurry composition on at least one surface of a porous substrate to form an inorganic particle layer, wherein the binder includes a first water-soluble polymer including a metal carboxylate group and a second water-soluble polymer based on (meth)acrylamide.

In the method for manufacturing a separator according to an exemplary embodiment, the first water-soluble polymer may be any one or more selected from the group consisting of polyacrylic acid metal salts, carboxymethyl cellulose metal salts, and alginic acid metal salts, and the metal may include alkali metals, alkaline earth metals, or combinations thereof.

In the method for manufacturing a separator according to an exemplary embodiment, the first water-soluble polymer may have a weight average molecular weight of 2,000 to 100,000 g/mol.

In the method for manufacturing a separator according to an exemplary embodiment, the second water-soluble polymer may be polyacrylamide or a copolymer including the same.

In the method for manufacturing a separator according to an exemplary embodiment, the copolymer may be a copolymer including or based on (using) one, two, or three monomer polymerization unit(s), which respectively are selected from the group consisting of a (meth)acrylamide-based monomer polymerization unit; a hydroxyl group-containing (meth)acrylate-based monomer polymerization unit, and a polyfunctional (meth)acrylamide-based monomer polymerization unit, or a combination thereof. The copolymer preferably includes, or is based on, a (meth)acrylamide-based monomer polymerization unit; or the copolymer includes a (meth)acrylamide-based monomer polymerization unit and a hydroxyl group-containing (meth)acrylate-based monomer polymerization unit; or the copolymer includes a (meth) acrylamide-based monomer polymerization unit, a hydroxyl group-containing (meth)acrylate-based monomer polymerization unit and a polyfunctional (meth)acrylamide-based monomer polymerization unit.

In still another general aspect, an electrochemical device includes the separator as described above.

In still another general aspect, the present disclosure provides a use of a combination of binder materials including both a water-soluble polymer having a metal carboxylate salt as a functional group and a water-soluble (meth) acrylamide-based polymer in a separator for battery to inhibit electrolyte decomposition of the battery.

In the use according to an exemplary embodiment, the inhibition of electrolyte decomposition may be determined by measuring any produced decomposition product of the electrolyte represented by a phosphine by-product and/or by HF, preferably by measuring the produced HF.

In the use according to an exemplary embodiment, the inhibition of electrolyte decomposition may be determined by the test of "electrolyte decomposition inhibition characteristic of separator" described in the description.

In the use according to an exemplary embodiment, the HF content, optionally as determined in the disclosed test, is 300 ppm or lower, preferably 200 ppm or lower.

In the use according to an exemplary embodiment, a non-aqueous solvent used in the electrolyte includes one or more cyclic or linear carbonates, preferably without using a further additive such as an alkali metal salt as the electrolyte additive.

Other features and aspects will be apparent from the following detailed description, the drawings, and the claims.

## DETAILED DESCRIPTION OF EMBODIMENTS

The embodiments described in the present specification may be modified in many different forms, and the technology according to an exemplary embodiment is not limited to the embodiments set forth herein. In addition, the embodiments of an exemplary embodiment are provided so that the present disclosure will be described in more detail to a person with ordinary skill in the art.

In addition, the singular form used in the specification and claims appended thereto may be intended to include a plural form also, unless otherwise indicated in the context.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the specification of the present disclosure, values which may be outside a numerical range due to experimental error or rounding off of a value are also included in the defined numerical range.

Furthermore, throughout the specification, unless explicitly described to the contrary, "including" or "comprising" any constituent elements will be understood to imply further inclusion of other constituent elements rather than exclusion of other constituent elements.

In the present specification, it will be understood that when an element such as a layer, film, region, or substrate is referred to as being "on" or "above" another element, it can be "directly on" the other element or intervening elements may also be present.

The terms such as "first" and "second" used in the present specification may be used to describe various constituent elements, but the constituent elements are not to be limited to the terms. The terms are only used to differentiate one constituent element from other constituent elements.

"Monomer polymerization unit" used in the present specification may refer to a basic repeating unit in a polymer chain that orinates from the monomer.

In the present specification, "(meth)acryl" refers to acryl and/or methacryl.

"Substituted" in the expression "substituted or unsubstituted" in the present specification means that one or more hydrogen atoms in a hydrocarbon are independently of each other replaced with the same or different substituent. A non-limiting example of the substituent may include deuterium, a halogen group, a hydroxyl group, an amino group, a C1 to C30 amine group, a nitro group, a C1 to C30 silyl group, a C1 to C30 alkyl group, a C1 to C30 alkylsilyl group, a C3 to C30 cycloalkyl group, a C1 to C30 heterocycloalkyl group, a C6 to C30 aryl group, a C1 to C30 heteroaryl group, a C1 to C20 alkoxy group, a C1 to C10 trifluoroalkyl group, or a cyano group.

"Dn" (n is a real number) in the present specification refers to a particle diameter of a particle which is equivalent to n% in terms of a volume-based integrated fraction. For example, "D50" refers to a particle diameter of a particle which is equivalent to 50% in terms of a volume-based integrated fraction. Dn may be derived from particle size distribution results obtained by collecting a sample of inorganic particles to be measured in accordance with the standard of KS A ISO 13320-1 and performing analysis using Multisizer 4e Coulter counter available from Beckman coulter.

A conventional method for inhibiting electrolyte decomposition of a battery is mainly adding an "additive" as one component (a "further additive") in an electrolyte beyond the electrolyte substance as such (e.g. a lithium salt) and beyond a solvent substance, but the limitation of the electrolyte additives is that they are sensitive to moisture and difficult to store, are expensive, and are in the form of being dissolved in the electrolyte to adversely affect cell performance.

Thus, the present inventors conducted repeated research, and as a result, confirmed that when a separator including both a polymer using a metal carboxylate salt as a functional group and a (meth)acrylamide-based polymer as a binder is used in a battery, electrolyte decomposition may be inhibited while overcoming the limitations described above, thereby inventing the present disclosure.

That is, the separator including an inorganic particle layer including the binder according to the present disclosure may effectively inhibit the electrolyte decomposition reaction, improve the performance of an electrochemical device without deterioration, and also, simultaneously secure excellent heat resistance and adhesion, by designing a specific polymer combination. In addition, a battery having a characteristic of significantly decreasing changes such as volume expansion of an electrochemical device over time may be provided, and also, an effect of having a significantly excellent

life characteristic by reduced resistance of a battery may be provided.

The separator according to an exemplary embodiment includes: a porous substrate; and an inorganic particle layer which is formed on at least one surface of the porous substrate and includes a binder and inorganic binder wherein the binder includes a first water-soluble polymer including a metal carboxylate group and a second water-soluble polymer based on (meth)acrylamide. Herein, the (meth)acrylamide-based polymer refers to a polymer including a (meth) acrylamide-based monomer polymerization unit.

Since the separator includes a mixed binder including the first water-soluble polymer and the second water-soluble polymer, the electrolyte decomposition reaction is effectively inhibited while solving a conventional problem due to an electrolyte decomposition inhibitor added to a electrolyte, thereby significantly improving performance of an electrochemical device such as a lithium secondary battery.

Specifically, since the mixed binder including the first water-soluble polymer including a metal carboxylate group and the second water-soluble polymer based on (meth)acrylamide is used as the binder, the binder provides a water-based separator which is stable in moisture and which is environmentally friendly. Since the separator according to an exemplary embodiment includes the binder described above, electrolyte decomposition inside the separator may be inhibited to inhibit a side reaction which additionally occurs. In addition, the separator significantly inhibits the electrolyte decomposition reaction, and also has both excellent heat resistance and adhesion. An electrochemical device, which conventionally was using a further additive to function as an electrolyte decomposition inhibitor added to the electrolyte, has a disadvantage in which the electrolyte decomposition inhibitor is dissolved in an electrolyte to adversely affect cell performance. However, in the electrochemical device according to an exemplary embodiment, the binder included in the separator is not dissolved in the electrolyte, thereby solving the conventional problem in which the electrolyte decomposition inhibitor is dissolved in the electrolyte to adversely affect cell performance. Since the electrochemical device may inhibit electrolyte decomposition while solving the conventional problem as such, it may have excellent resistance and life characteristics.

Hereinafter, each constituent of the separator according to an exemplary embodiment of the present disclosure will be described.

As an exemplary embodiment, the first water-soluble polymer is a polymer including a metal carboxylate group. In the present disclosure, the first water-soluble polymer including a metal carboxylate group may be obtained by using a polymer or copolymer in which a metal carboxylate group is present or introduced as appropriate polymerization unit(s) bearing the metal carboxylate group.

Further, the first water-soluble polymer is not particularly limited. The first water-soluble polymer including a metal carboxylate group may be a homopolymer or a copolymer. Without being bound to any theory, it may be believed that since the first water-soluble polymer includes the metal carboxylate group which may contribute to exert a electrolyte decomposition inhibitory effect, without the polymer-bound group however being soluble in the electrolyte, a main chain and/or a side chain is not particularly limited as long as it includes a metal carboxylate group. For example, the first water-soluble polymer may be any one or more selected from the group consisting of polyacrylic acid metal salts, carboxymethyl cellulose metal salts, and alginic acid metal salts.

As an exemplary embodiment, the metal of the metal carboxylate group may include an alkali metal, an alkaline earth metal, or a combination thereof, and specifically, may be sodium or lithium.

As an exemplary embodiment, the first water-soluble polymer may have a weight average molecular weight in terms of polyethylene glycol of 2,000 g/mol or more, 3,000 g/mol or more, 100,000 g/mol or less, 50,000 g/mol or less, 40,000 g/mol or less, 30,000 g/mol or less, 15,000 g/mol or less, or a value between the numerical values, as measured using gel permeation chromatography. Specifically, the first water-soluble polymer may have the weight average molecular weight of 2,000 to 100,000 g/mol, 2,000 to 50,000 g/mol, 3,000 to 40,000 g/mol, 3,000 to 30,000 g/mol, or 3,000 to 15,000 g/mol.

The separator according to an exemplary embodiment may have further improved electrolyte decomposition inhibition characteristic, heat resistance, and adhesion, when the weight average molecular weight of the first water-soluble polymer satisfies the above range.

As an exemplary embodiment, the separator may include the first water-soluble polymer at 1 part by weight or more, 2 parts by weight or more, 5 parts by weight or more and 20 parts by weight or less, 15 parts by weight or less, or a value between the numerical values, with respect to 100 parts by weight of the inorganic particles. Specifically, the separator may include 1 to 20 parts by weight, 1 to 10 parts by weight, 2 to 15 parts by weight, or 5 to 15 parts by weight of the first water-soluble polymer, with respect to 100 parts by weight of the inorganic particles. The separator according to an exemplary embodiment may have further improved electrolyte decomposition inhibition characteristic, heat resistance, and adhesion, when the content of the first water-soluble polymer satisfies the above range.

In a preferred exemplary embodiment, the separator may include 1 to 9 parts by weight or 2 to 8 parts by weight of the first water-soluble polymer, with respect to 100 parts by weight of the inorganic particles. When the content of the first water-soluble polymer satisfies the above range, the separator may be applied to a battery having better performance.

Since the separator according to an exemplary embodiment includes the second water-soluble polymer based

on the (meth)acrylamide-based together with the first water-soluble polymer, the electrolyte decomposition reaction may be effectively inhibited, adhesion between the porous substrate and the inorganic particle layer may be increased, and heat resistance at a high temperature may be improved.

The second water-soluble polymer based on (meth)acrylamide may be a homopolymer or a copolymer. The second water-soluble polymer based on (meth)acrylamide may be a homopolymer or a copolymer in which a (meth) acrylamide is used as polymerization unit(s).

As an exemplary embodiment, the second water-soluble polymer may include poly(meth)acrylamide or a copolymer including the same. In an exemplary embodiment, the copolymer may be a block copolymer or a random copolymer, but the copolymer described in the present disclosure refers to a random copolymer which is polymerized by mixing two or more monomers together.

As an exemplary embodiment, the copolymer including poly(meth)acrylamide may be a copolymer including one, two, or three monomer polymerization unit(s) selected from the group consisting of a (meth)acrylamide-based monomer polymerization unit; a hydroxyl group-containing (meth)acrylate-based monomer polymerization unit, and a polyfunctional (meth)acrylamide-based monomer polymerization unit, or a combination thereof.

It is more preferred that the second water-soluble polymer is a copolymer including the (meth)acrylamide-based monomer polymerization unit, the hydroxyl group-containing (meth)acrylate-based monomer polymerization unit, and the polyfunctional (meth)acrylamide-based monomer polymerization unit, since the effect to be desired in the present disclosure may be best achieved, but the present disclosure is not limited thereto. That is, since the separator according to an exemplary embodiment includes the copolymer, an electrolyte decomposition inhibition characteristic, heat resistance, and adhesion may be further improved.

In an exemplary embodiment, the (meth)acrylamide-based monomer polymerization unit may include a structure of the following Chemical Formula 1:

[Chemical Formula 1]

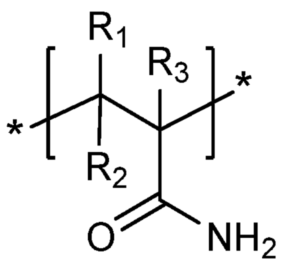

wherein $R_1$ to $R_3$ are independently of one another hydrogen, or substituted or unsubstituted, linear or branched C1 to C6 alkyl group.

In an exemplary embodiment, the hydroxyl group-containing (meth)acrylate-based monomer polymerization unit may include a structure of the following Chemical Formula 2:

[Chemical Formula 2]

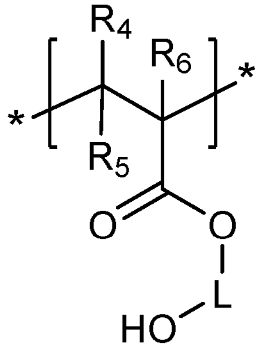

wherein $R_4$ to $R_6$ are independently of one another hydrogen or C1 to C6 alkyl group, and L is a C1 to C6 linear or branched alkylene group.

The polyfunctional (meth)acrylamide-based monomer polymerization unit may be produced by polymerizing a polyfunctional monomer represented by the following Chemical Formula 3:

[Chemical Formula 3]

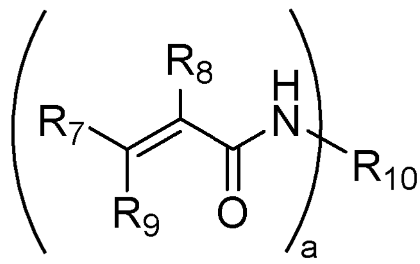

wherein $R_7$ to $R_9$ are independently of one another hydrogen, or substituted or unsubstituted, linear or branched C1 to C6 alkyl group, $R_{10}$ is a C1 to C10 linear or branched hydrocarbon group, and a is 2 to 6, preferably 2 or 3 .

In the second water-soluble polymer according to an exemplary embodiment, the (meth)acrylamide-based monomer may be included at 65 to 98 mol% or 70 to 95 mol%. The hydroxyl group-containing (meth)acryl-based monomer may be included at 2 to 35 mol%, 3 to 30 mol%, or 5 to 25 mol%. The polyfunctional (meth)acrylamide-based monomer may be included at 0.001 to 1 mol% or 0.01 to 0.5 mol%. When the second water-soluble polymer is prepared within the content range, sufficient adhesive strength may be obtained, a more significant effect may be obtained at a shrinkage rate at a high temperature, and an electrolyte decomposition reaction may be effectively inhibited to further improve an effect of inhibiting a side reaction by a decomposition product of an electrolyte.

In an exemplary embodiment, the second water-soluble polymer may have a weight average molecular weight of 100,000 g/mol or more, 200,000 g/mol or more and 2,000,000 g/mol or less, 1,000,000 g/mol or less, 500,000 g/mol or less, or a value between the numerical values. Specifically, the second water-soluble polymer may have a weight average molecular weight of 100,000 to 2,000,000 g/mol, 200,000 to 1,000,000 g/mol, or 200,000 to 500,000 g/mol. According to an exemplary embodiment, when the weight average molecular weight of the second water-soluble polymer satisfies the above range, electrolyte decomposition inhibition characteristic, heat resistance, and adhesion may be further improved. The weight average molecular weight is an average molecular weight in terms of polyethylene glycol measured using gel permeation chromatography.

The preparation method is not particularly limited as long as the second water-soluble polymer according to the exemplary embodiment described above may be provided, but in an exemplary embodiment, the second water-soluble polymer may be prepared by various known preparation methods such as emulsion polymerization, suspension polymerization, bulk polymerization, and solution polymerization.

In an exemplary embodiment, the second water-soluble polymer may be obtained by copolymerizing a mixture including the monomer components described above; and a polymerization initiator.

In an exemplary embodiment, the type of polymerization initiator is not particularly limited as long as the copolymer may be obtained, but in an exemplary embodiment, the polymerization initiator may be an azo-based initiator, a peroxide-based initiator, or a persulfate-based polymerization initiator such as potassium persulfate, sodium persulfate, or ammonium persulfate.

According to an exemplary embodiment, the second water-soluble polymer may be obtained by heating to 50 to 90°C or 60 to 80°C, and then adding a polymerization initiator to perform a polymerization reaction.

In an exemplary embodiment, after the polymerization reaction is completed, the temperature is lowered to room temperature (20±5°C), and a basic solution or another or similar pH adjusting agent(s) are added to prepare a second water-soluble polymer aqueous solution adjusted to a neutral state.

In the separator, in an exemplary embodiment, a content of the second water-soluble polymer may be 0.1 parts by weight or more, 0.5 parts by weight or more, 1 part by weight or more and 10 parts by weight or less, 5 parts by weight or less, 3 parts by weight or less, or a value between the numerical values, with respect to 100 parts by weight of the inorganic particles forming the inorganic particle layer. Specifically, the second water-soluble polymer may be included at 0.1 to 10 parts by weight, 0.5 to 5 parts by weight, or 1 to 3 parts by weight, with respect to 100 parts by weight of the inorganic particles. The separator according to an exemplary embodiment may have further improved electrolyte decomposition inhibition characteristic, heat resistance, and adhesion, when the content of the second water-soluble polymer satisfies the above range.

The separator according to an exemplary embodiment effectively inhibits the electrolyte decomposition reaction, and also simultaneously, has excellent heat resistance. According to an exemplary embodiment, heat shrinkage rates in MD and TD as measured after being allowed to stand at 150°C for 60 minutes may be 2% or less or 1.5% or less, preferably 1% or less, 0.8% or less, or 0.5% or less, and more preferably 0.3% or less or 0.2% or less.

In an exemplary embodiment, the porous substrate may be a polyolefin-based porous substrate such as polyethylene, polypropylene, or copolymers thereof, but is not limited thereto, and all porous substrates known as a porous substrate of a separator of an electrochemical device may be used. In an exemplary embodiment, the porous substrate may be made of a film or sheet, but is not particularly limited.

In an exemplary embodiment, the porous substrate may have a thickness of 1 μm or more, 3 μm or more, 5 μm or more and 100 μm or less, 50 μm or less, 30 μm or less, 20 μm or less, 15 μm or less, 12 μm or less, or a value between the numerical values, and 1 to 100 μm, specifically, for implementing a high capacity battery, 3 to 50 μm, more specifically 5 to 20 μm, and still more specifically 5 to 15 μm. Though it is not limited thereto, the porous substrate may be manufactured by stretching.

In an exemplary embodiment, the porous substrate may have a porosity of 20 to 60%, specifically 30 to 60%, but is not limited thereto. General weighing method is employed to calculate the porosity of the material. As weight(W), volume and density($\rho$=0.95 g/cm$^3$, fixed value) are familiar using these parameters we can calculate the porosity as follows: Vm = W/ $\rho$. Consequently, we can calculate the volume of the pores(Vp) substituting total volume(Vt, cm$^3$) and material volume(Vm) to next equation: Vp=Vt-Vm. Finally knowing Vp and Vt, we can get the Ø(porosity) using the formula below: Ø = Vp/Vt * 100.

In an exemplary embodiment, the porous substrate may have a Gurley permeability of 50 sec/100 cc or more, 70 sec/100 cc or more and 100 sec/100 cc or less, 500 sec/100 cc or less, 200 sec/100 cc or less, 150 sec/100 cc or less, or a value between the numerical values, and 50 to 500 sec/100 cc, specifically 70 to 200 sec/100 cc, but is not limited thereto. Air permeability was measured in accordance with ASTM D726.

In an exemplary embodiment, the porous substrate may have a tensile strength in TD (transverse direction) and MD (machine direction) of independently of each other 1000 kgf/cm$^2$ or more, 1500 kgf/cm$^2$ or more and 5000 kgf/cm$^2$ or less, 4000 kgf/cm$^2$ or less, or a value between the numerical values, and 1000 to 5000 kgf/cm$^2$, specifically 1500 to 4000 kgf/cm$^2$, but is not limited thereto.

In an exemplary embodiment, the porous substrate may not substantially include a polar functional group on the surface. When the separator according to an exemplary embodiment includes the porous substrate which does not substantially include a polar functional group on the surface, together with the specific polymer combination as described above, the electrolyte decomposition inhibition characteristic may be further improved. Herein, the porous substrate which does not substantially include a polar functional group means the porous substrate which includes less than 1 wt% or less than 0.5 wt% of a polar functional group based on the total weight of the porous substrate. Specifically, the polar functional group may not be introduced to the porous substrate, when the porous substrate is not hydrophilically surface-treated, or is hydrophilically surface-treated only in a substantially limited manner. A non-limiting example of the polar functional group on the surface of the porous substrate may include a carboxyl group, an aldehyde group, a hydroxyl group, and similar or equivalent polar functional groups, but is not particularly limited thereto. The hydrophilic surface treatment may be, according to an example, a corona discharge treatment or a plasma discharge treatment.

In an exemplary embodiment, the inorganic particle layer includes the binder and inorganic particles, and may be a porous inorganic particle layer in which the inorganic particles are connected and fixed by the binder to form pores. In an exemplary embodiment, the inorganic particle layer is provided on at least one surface of the porous substrate, optionally is provided on both surfaces of the porous substrate, and may occupy an area fraction of 60% or more, 70% or more, 80% or more, or 90% or more, based on an overall surface of the porous substrate, and preferably, may be formed on the area of the porous substrate of 100%.

In an exemplary embodiment, the inorganic particle layer may be coated on one or both surfaces of the porous substrate, and when both surfaces of the porous substrate are coated with the inorganic particle layer, the thicknesses of the inorganic particle layers coated on one surface and the other surface may be the same as or different from each other. Though it is not particularly limited, in an exemplary embodiment, the thickness of the inorganic particle layer coated on one surface may be 0.01 um or more, 0.2 um or more, 0.5 um or more and 15 um or less, 10 um or less, 5 um or less, or a value between the numerical values. In a specific exemplary embodiment, the inorganic particle layer may have a thickness of 0.01 um to 15 um, 0.2 um to 10 um, or 0.5 um to 5 um. We use the caliper thickness gauge to measure the thickness of a separator, where the separator is prepared by stacking 10 layers together. Five measurements at different points on the stacked separator is repeatedly recorded. After obtaining these measurements, calculate the average thickness value of the 10 layers separator from the five results to ensure the accuracy, and dividing the value by 10 again to derive an average thickness of the porous separator. The thickness of the inorganic particle layer was determined by subtracting the thickness of the porous substrate from the thickness of the separator. Wherein, the thickness of the porous substrate was calculated by stacking 10 layers of the porous substrate alone and performing the same method as for measuring the thickness of the separator.

As an exemplary embodiment, the inorganic particles are not limited as long as they are inorganic particles used in the art. A non-limiting example of the inorganic particles may include one or two or more of metal hydroxides, metal oxides, metal nitrides, and metal carbides, or one or two or more of $SiO_2$, SiC, MgO, $Y_2O_3$, $Al_2O_3$, $CeO_2$, CaO, ZnO, $SrTiO_3$, $ZrO_2$, $TiO_2$, and AlO(OH) . In view of battery stability and similar properties, the inorganic particles may be preferably metal hydroxide particles such as boehmite.

Though the metal hydroxide is not particularly limited, a non-limiting example thereof may include one or two or more of boehmite (including e.g. typical boehmite and pseudo-boehmite), aluminum hydroxide, and magnesium hydroxide. In an exemplary embodiment, when the boehmite is used, for example, a specific surface area (BET) may be 10 $m^2$/g or more or 15 $m^2$/g or more, but is not limited thereto.

In an exemplary embodiment, the inorganic particles may have an average diameter (D50) of 0.01 um or more, 0.05 μm or more, 0.1 μm or more and 5 μm or less, 3 μm or less, 2 μm or less, 1 μm or less, or a value between the numerical values, and specifically, 0.01 μm to 5 μm, 0.05 μm to 3 μm, more specifically 0.05 μm to 2 μm, and still more preferably 0.1 μm to 1 μm.

An exemplary embodiment may provide a method for manufacturing a separator including: (S1) preparing a slurry composition including a binder and inorganic particles; and (S2) applying the slurry composition on at least one surface of a porous substrate to form an inorganic particle layer, wherein the binder includes a first water-soluble polymer including a metal carboxylate group and a second water-soluble polymer based on (meth)acrylamide.

As to the porous substrate, the inorganic particle layer, and the binder including the first water-soluble polymer including a metal carboxylate group and the second water-soluble polymer based on (meth)acrylamide, reference is made to the above description in relation to the components of the separator and the embodiments thereof, which may fully apply to corresponding exemplary embodiments of the method for manufacturing a separator.

Hereinafter, each step of the method for manufacturing a separator according to the exemplary embodiment will be described. Since the description of each of the porous substrate, the inorganic particle layer, the inorganic particles, the first water-soluble polymer, and the second water-soluble polymer is as described above, detailed description will be omitted.

As the method of preparing a slurry composition in (SI), any common method known in the art may be applied without limitation, and though it is not particularly limited, according to a non-limiting example, the inorganic particles may be dispersed by stirring to prepare a slurry, and agglomerated inorganic particles may be dispersed using a ball mill.

The slurry composition includes the inorganic particles, the first water-soluble polymer, the second water-soluble polymer, and a solvent, and the solvent may be water, lower alcohols such as ethanol, methanol, and propanol, solvents such as dimethylformamide, acetone, tetrahydrofuran, diethylether, methylene chloride, DMF, N-ethyl-2-pyrrolidone, hexane, and cyclohexane, or a mixture thereof, but is not necessarily limited thereto.

In an exemplary embodiment, though a solid content of the slurry composition is not particularly limited, it may be, for example, 1 to 50 wt%, 5 to 30 wt%, or 10 to 30 wt%, but is not limited thereto.

In an exemplary embodiment, the slurry composition may include 70 to 95 wt% of the inorganic particles, 1 to 20 wt% of the first water-soluble polymer, and 0.1 to 10 wt% of the second water-soluble polymer, and specifically, 80 to 95 wt% of the inorganic particles, 2 to 15 wt% of the first water-soluble polymer, and 0.5 to 5 wt% of the second water-soluble polymer, based on the total weight of the solid content, but is not limited thereto.

As a method of applying the slurry composition in (S2), any common method known in the art may be applied without limitation, and according to a non-limiting example, roll coating, spin coating, dip coating, bar coating, die coating, slit coating, inkjet printing, and a combination of these methods may be applied. The applied slurry may be dried and formed into an inorganic particle layer. Drying for forming the inorganic particle layer is not particularly limited, but may be performed at 100°C or lower or 30 to 60°C.

In a specific exemplary embodiment, after performing drying for forming the inorganic particle layer, a process of aging the porous substrate having the inorganic particle layer formed thereon may be further included. Specifically, the aging may be performed at 50 to 150°C or 60 to 120°C, and an aging time may be 2 hours to 24 hours or 10 to 20 hours. More specifically, the aging may be performed in a temperature range of 70 to 120°C for 10 to 15 hours. The aging may increase adhesion between the porous substrate and the inorganic particle layer, and further improve heat resistance at a high temperature.

According to an exemplary embodiment, an electrochemical device including the separator according to an exemplary embodiment of the exemplary embodiments described above may be provided, and the electrochemical device may have reduced electrical resistance by including the separator as described above, and thus, may have significantly excellent life characteristics.

The electrochemical device may be all known energy storage devices, and though it is not particularly limited, it may be a lithium secondary battery, as a non-limiting example. Since the lithium secondary battery is well known and its configuration is also known, it will not described in detail in the present disclosure.

The lithium secondary battery according to an exemplary embodiment may include the separator described above between a positive electrode and a negative electrode. Herein, the positive electrode and the negative electrode

may be used without limitation as long as they are commonly used in the lithium secondary battery.

When the separator according to an exemplary embodiment is commonly used in a battery, the manufacturing method follows a common manufacturing method in which a negative electrode, a separator, and a positive electrode are arranged and assembled, and an electrolyte solution is injected thereto to complete the manufacture, and thus, the manufacturing method will not be described any more in detail.

The present disclosure further provides a use of a combination of binder materials including both the water-soluble polymer having a metal carboxylate salt as a functional group and the water-soluble (meth)acrylamide-based polymer in a separator for battery, since this combination of binder materials can exert a technical effect to inhibit electrolyte decomposition of the battery.

The inhibition of electrolyte decomposition may be determined by measuring a limited generation of a decomposition product of the electrolyte, wherein a suitable and useful indicator of such by-product formation may be a phosphine compound and/or HF, preferably by measuring any generated HF. Any residual HF content may be measured, for instance, by $^{19}F$ NMR analysis. Optionally the inhibition of electrolyte decomposition may be determined by the test of "electrolyte decomposition inhibition characteristic of separator" described in the experimental part below.

In a preferable embodiment, the HF content in such a test for decomposition lies in a range of 300 ppm or lower, more preferably 200 ppm or lower.

Hereinafter, the examples and the experimental examples will be illustrated specifically in detail in the following. However, the examples and the experimental examples described later are only a partial illustration, and the technology described in the present specification is not construed as being limited thereto.

First, methods of evaluating the characteristics of the separator and the secondary battery will be described.

**[Weight average molecular weight]**

The weight average molecular weight was measured using GPC (Tosoh, EcoSEC HLC-8320 GPC Reflective Index detector). Tskgel guard PWx, two TSKgel GMPWxls, and TSKgel G2500PWxl (7.8×300mm) were used as a GPC column, a 0.1 M $NaNO_3$ aqueous solution was used as a solvent, polyethylene glycol was used as a standard, and analysis was performed at 40°C at a flow rate of 1 ml/min.

**[Electrolyte decomposition inhibition characteristic of separator]**

In order to evaluate the electrolyte decomposition inhibition characteristic of the separator, 0.8 g of a separator which was in a state of being impregnated in 10 g of an electrolyte in which 1 M lithium hexafluorophosphate ($LiPF_6$) was dissolved in a solution of ethylene carbonate (EC), ethyl methyl carbonate (EMC), and dimethyl carbonate (DMC) at a volume ratio of 30:50:20 was stored in an oven set to 60°C for 10 days. Thereafter, the electrolyte in which the separator was impregnated was analyzed by $^{19}F$ NMR analysis to confirm a degree of the produced decomposition product of the electrolyte represented by a phosphine by-product and HF. Specifically, in order to quantify the electrolyte decomposition inhibition characteristics, an integral value of the peak of HF in the $^{19}F$ NMR analysis spectrum was calculated to measure the HF content.

**[Heat shrinkage rate of separator]**

The heat shrinkage rate of the separator was measured based on ASTM D 1204, by the following method. Grid points were marked at 2 cm intervals on a square having sides of 10cm on a separator. One side of the square was the transverse direction (TD) and the other side of the square was the machine direction (MD). A specimen was placed in the center, 5 sheets of paper were placed each on and under the specimen, and the four sides of the paper were wrapped with tape. The specimen wrapped in paper was allowed to stand in a hot air drying oven at 150°C for 60 minutes. Thereafter, the specimen was taken out, the separator was observed with a camera, and the shrinkage rate in the machine direction of the following Equation 1 and the shrinkage rate in the width direction of the following Equation 2 were calculated.

Shrinkage rate in machine direction (%) = {(length in machine direction before heating - length in machine --> direction after heating) / length in machine direction before heating} × 100 [Equation 1]

Shrinkage rate in width direction (%) = { (length in width direction before heating - length in width direction after heating) / length in width direction before heating} × 100 [Equation 2]

**[Adhesion of separator]**

A separator was cut into a size of 50 mm wide×50 mm long and placed so that the inorganic particle layer was on top. A piece of black drawing paper (20 mm wide×150 mm long×0.25 mm thick) having a coefficient of dynamic fraction of 0.15 was placed thereon, a pressing device was used to apply a certain pressure (200 g/cm$^2$), the black drawing paper was forcibly pulled to the side, and a degree of inorganic material adhered on the surface was confirmed and determined as A/B/C/D/E/F depending on the adhesion degree, referring to the following grade:

A: no adhesion
B: inorganic material adhered in a small amount

In C-F, the binder and the inorganic material were adhered together and the degree was increasingly severe from C toward F.

**[Initial performance of secondary battery]**

In order to evaluate the initial performance of the secondary batteries manufactured according to each example and comparative example, resistance and discharge output of the secondary battery were measured by the following method, and the performance of the batteries of the remaining examples and comparative examples was relatively evaluated based on Comparative Example 1.

The secondary battery was charged at 0.5 C CC/CV (4.2 V 0.05 C CUT-OFF) at 25°C, and then a battery thickness was measured.

The secondary battery was charged to 4.2 V, 0.05 C with a constant current-constant voltage (CC-CV) using a charge/discharge cycle device at room temperature, and then discharged to 2.7 V at a current of 0.5 C. Then, direct current internal resistance (DC-IR) was measured at 60% of state of charge (SOC) by a J-pulse method.

The output characteristics of the secondary battery at a state of charge of 50% at room temperature were measured by a hybrid pulse power characterization by FreedomCar battery test manual (HPPC) method.

**[Life characteristics]**

The secondary battery manufactured according to each of the examples and the comparative examples was charged at a constant current-constant voltage (CC-CV) of 4.2 V using a charge/discharge cycle device, and then discharged. The secondary battery was charged at constant current with a 0.5 C rate at 25°C until the voltage reached 4.2 V, and charged at constant voltage until the current was 0.01 C while maintaining 4.2 V. Subsequently, a cycle of discharging at a constant current of 0.5 C until the voltage reached 3.0 V during discharging was repeated 800 times. As the resistance, direct current internal resistance (DC-IR) was measured by a J-pulse method, and then a resistance increase rate (ΔR) was calculated by the following equation. The values of the remaining examples and comparative examples were relatively evaluated based on Comparative Example 1, and the lower the numerical value, the lower the relative resistance increase rate.

$$\Delta R\ (\%) = (R_2 - R_1)/R_1 \times 100$$

wherein $R_1$ is initial resistance (mQ) measured after a first cycle of each manufactured battery, and $R_2$ is resistance (mQ) after 800 cycles.

In addition, a capacity retention rate (ΔC) was calculated according to the following equation, and likewise, the values of the remaining examples and comparative examples were relatively evaluated based on Comparative Example 1. The higher the numerical value, the higher the relative capacity retention rate.

$$\Delta C\ (\%) = (C_2 - C_1)/C_1 \times 100$$

wherein $C_1$ is an initial discharge capacity (Ag) measured after a first cycle of each manufactured battery, and $C_2$ is a discharge capacity (Ag) after 800 cycles.

**[Storage stability at high temperature]**

The secondary battery manufactured according to each of the examples and the comparative examples was stored in an oven at 60°C for 80 days, and then direct current internal resistance (DC-IR) and discharge capacity were

measured by the J-pulse method described above. Thereafter, the resistance increase rate (ΔR') and the capacity retention rate (ΔC') were calculated according to the following equations, respectively, and the values of the remaining examples and comparative examples were relatively evaluated based on Comparative Example 1. The lower the numerical value, the lower the relative resistance increase rate, and the higher the numerical value, the higher the relative capacity retention rate.

$$\Delta R' \ (\%) = (R_4 - R_3)/R_3 \times 100$$

wherein $R_3$ is initial resistance (mQ) before storing each manufactured battery in an oven, and R4 is resistance (mQ) after storing in an oven at 60°C for 80 days.

$$\Delta C' \ (\%) = (C_4 - C_3)/C_3 \times 100$$

wherein C3 is discharge capacity (Ag) before storing each manufactured battery in an oven, and C4 is discharge capacity (Ah) after storing in an oven at 60°C for 80 days.

**<Preparation Example 1>**

The inside of a 1.0 L flask was replaced with nitrogen, 1055 mmol of acrylamide as a monomer component and 700 g of distilled water were added to the flask, and heating to 75°C was performed. Thereafter, 0.789 mmol of ammonium persulfate as a polymerization initiator was further added to the flask, the flask was closed, and a polymerization reaction of the mixture proceeded. After the polymerization reaction was performed for 12 hours, the closed flask was opened to the air to lower the temperature to room temperature, and a 1M sodium hydroxide solution was added to adjust the pH to 7, thereby preparing a second water-soluble polymer aqueous solution. At this time, the prepared second water-soluble polymer had a weight average molecular weight of 280,000 g/mol.

**<Preparation Example 2>**

A second water-soluble polymer aqueous solution was prepared in the same manner as in Preparation Example 1, except that 878 mmol of acrylamide as the monomer component and 204 mmol of 2-hydroxyethylmethacrylamide were used. At this time, the prepared second water-soluble polymer had a weight average molecular weight of 300,000 g/mol.

**<Preparation Example 3>**

A second water-soluble polymer aqueous solution was prepared in the same manner as in Preparation Example 1, except that 932 mmol of acrylamide as the monomer component, 89 mmol of 2-hydroxyethylmethacrylate, and 0.324 mmol of N'-methylenebisacrylamide were used. At this time, the prepared second water-soluble polymer had a weight average molecular weight of 250,000 g/mol.

**<Example 1>**

Preparation of slurry composition

90.35 wt% of boehmite (γ-AlO(OH)) having an average particle diameter (D50) of 0.6 um, 8.64 wt% of a sodium polyacrylate salt (Sigma-aldrich, Mw: 5,100 g/mol), and 1.01 wt% of the second water-soluble polymer prepared in Preparation Example 1, based on the total weight of the solid content were added to water, and then stirring was performed to prepare a slurry composition having a solid content concentration of 25 wt%.

Manufacture of separator

A polyethylene porous film (porosity: 48%, Gurley permeability: 82 sec/100 cc, tensile strength in MD: 2020 $kgf/cm^2$, tensile strength in TD: 1950 $kgf/cm^2$) having a thickness of 9 um was used as a porous substrate. Both surfaces of the porous substrate were coated with the slurry composition prepared above without a surface treatment to form an inorganic particle layer having a thickness of 2.0 um, respectively. The porous substrate on which the inorganic particle layer was prepared was aged at 80°C for 12 hours to manufacture a separator. The characteristics of the separator are listed in the following Table 1.

Manufacture of secondary battery

94 wt% of $LiCoO_2$ as a positive electrode active material, 2.5 wt% of polyvinylidene fluoride as a fusing agent, and 3.5 wt% of carbon black as a conductive agent were added to N-methyl-2-pyrrolidone (NMP) as a solvent, and stirring was performed to prepare a uniform positive electrode slurry. The positive electrode slurry prepared above was coated on an aluminum foil having a thickness of 30 um, dried, and pressed to manufacture a positive electrode having a total thickness of 150 μm. 95 wt% of artificial graphite as a negative electrode active material, 3 wt% of acryl-based latex having Tg of -52°C as a fusing agent, and 2 wt% of carboxymethyl cellulose (CMC) as a thickener were added to water as a solvent, and stirring was performed to prepare a uniform negative electrode slurry. The negative electrode slurry prepared above was coated on a copper foil having a thickness of 20 um, dried, and pressed to manufacture a negative electrode having a total thickness of 150 um. The positive electrode, the negative electrode, and the separator manufactured above were assembled into a pouch type battery so that the separator was stacked between the positive electrode and the negative electrode, and the assembled battery was heat-fused at 80°C and 1 MPa with a heat press machine so that the positive electrode, the negative electrode, and the separator were fused to each other. Thereafter, an electrolyte in which 1 M lithium hexafluorophosphate (LiPF6) was dissolved in a solution including ethylene carbonate (EC), ethyl methyl carbonate (EMC), and dimethyl carbonate (DMC) at a volume ratio of 30:50:20 was injected, and the battery was sealed to manufacture a secondary battery having a capacity of 2 Ah. The initial performance, the life characteristics, and the storage stability at a high temperature of the secondary battery are listed in the following Table 2.

**<Example 2>**

A separator and a secondary battery were manufactured in the same manner as in Example 1, except that 94.05 wt% of boehmite, 4.91 wt% of a sodium polyacrylate salt, and 1.05 wt% of the second water-soluble polymer prepared in Preparation Example 1 were used based on the total weight of the solid content to prepare a slurry composition having a solid content concentration of 25 wt%. The characteristics of the separator and the secondary battery are listed in the following Tables 1 and 2.

**<Example 3>**

A separator and a secondary battery were manufactured in the same manner as in Example 2, except that the second water-soluble polymer prepared in Preparation Example 2 was used instead of the second water-soluble polymer prepared in Preparation Example 1. The characteristics of the separator and the secondary battery are listed in the following Tables 1 and 2.

**<Example 4>**

A separator and a secondary battery were manufactured in the same manner as in Example 2, except that the second water-soluble polymer prepared in Preparation Example 3 was used instead of the second water-soluble polymer prepared in Preparation Example 1. The characteristics of the separator and the secondary battery are listed in the following Tables 1 and 2.

**<Comparative Example 1>**

Preparation of slurry composition

97 wt% of boehmite (γ-AlO(OH)) having an average particle diameter (D50) of 0.6 um and 3 wt% of the second water-soluble polymer prepared in Preparation Example 1 based on the total weight of the solid without using the sodium polyacrylate salt were added to water, and then stirring was performed to prepare a slurry having a solid content concentration of 25 wt%.

Manufacture of separator

A polyethylene porous film (porosity: 48%, Gurley permeability: 82 sec/100 cc, tensile strength in MD: 2020 $kgf/cm^2$, tensile strength in TD: 1950 $kgf/cm^2$) having a thickness of 9 um was used as a porous substrate. The both surfaces of the porous substrate were corona discharge treated (power density: 2 W/mm) to introduce a surface polar group, and the corona discharge treatment was performed at a speed of 3 to 20 mpm (meter per minute). The both surfaces of the porous substrate to which the surface polar group was introduced were coated with the slurry composition prepared above to form an inorganic particle layer having a thickness of 2.0 um, respectively. The porous substrate on which the

inorganic particle layer was prepared was aged at 80°C for 12 hours to manufacture a separator. The characteristics of the separator are listed in the following Table 1.

Manufacture of secondary battery

A secondary battery was manufactured in the same manner as in Example 1, except that the separator manufactured above was used. The characteristics of the secondary battery are listed in the following Table 2.

**<Comparative Example 2>**

A separator and a secondary battery were manufactured in the same manner as in Comparative Example 1, except that the second water-soluble polymer prepared in Preparation Example 3 was used instead of the second water-soluble polymer prepared in Preparation Example 1. The characteristics of the separator and the secondary battery are listed in the following Tables 1 and 2.

**<Comparative Example 3>**

A slurry composition, a separator, and a secondary battery were manufactured in the same manner as in Example 1, except that polyvinyl alcohol (Sigma-Aldrich, Mw: 180,000 g/mol) was used instead of the second water-soluble polymer of Preparation Example 1. The characteristics of the separator and the secondary battery are listed in the following Tables 1 and 2.

**<Comparative Example 4>**

A slurry compositon, a separator, and a secondary battery were manufactured in the same manner as in Example 1, except that polyvinylpyrrolidone (Sigma-Aldrich, Mw: 55,000 g/mol) was used instead of the second water-soluble polymer of Preparation Example 1. The characteristics of the separator and the secondary battery are listed in the following Tables 1 and 2.

[Table 1]

| | HF content (ppm) | Heat shrinkage rate (%) | | Strawboard adhesive strength |
|---|---|---|---|---|
| | | MD | TD | |
| Example 1 | 121 | 1.4 | 0.9 | A |
| Example 2 | 180 | 1.5 | 1.1 | A |
| Example 3 | 181 | 0.4 | 0.5 | A |
| Example 4 | 178 | 0.2 | 0.1 | A |
| Comparative Example 1 | 421 | 3 | 2.5 | B |
| Comparative Example 2 | 415 | 2.6 | 1.8 | B |
| Comparative Example 3 | 612 | 6.2 | 4.5 | A |
| Comparative Example 4 | 430 | 7.5 | 4.5 | B |

[Table 2]

| | Initial performance | | Life characteristics | | Storage stability at high temperature | |
|---|---|---|---|---|---|---|
| | DCIR (mΩ) | Discharge output (W/kg) | Capacity retention rate (%) | Resistance increase rate (%) | Capacity retention rate (%) | Resistance increase rate (%) |
| Example 1 | Equivalent | Higher by 1.0% | Higher by 4.4% | Lower by 4.3% | Higher by 2.6% | Lower by 5.1% |
| Example 2 | Lower by 1.9% | Higher by 2.0% | Higher by 4.6% | Lower by 8.7% | Higher by 8.6% | Lower by 17.4% |

(continued)

| | Initial performance | | Life characteristics | | Storage stability at high temperature | |
|---|---|---|---|---|---|---|
| | DCIR (mΩ) | Discharge output (W/kg) | Capacity retention rate (%) | Resistance increase rate (%) | Capacity retention rate (%) | Resistance increase rate (%) |
| Example 3 | Lower by 2.1% | Higher by 2.2% | Higher by 4.7% | Lower by 9.5% | Higher by 8.2% | Lower by 17.4% |
| Exanple 4 | Lower by 2.2% | Higher by 2.6% | Higher by 4.6% | Lower by 9.9% | Higher by 8.7% | Lower by 17.5% |
| Corporative Example 1 | Standard | Standard | Standard | Standard | Standard | Standard |
| Corporative Example 2 | Equivalent | Equivalent | Higher by 1.1% | Lower by 0.7% | Higher by 1.1% | Lower by 0.5% |
| Corporative Example 3 | Higher by 0.7% | Lower by 1.2% | Lower by 3.5% | Higher by 5.1% | Lower by 2.5% | Higher by 3.3% |
| Corporative Example 4 | Equivalent | Equivalent | Lower by 1.5% | Higher by 0.6% | Lower by 0.7% | Higher by 1.3% |

Referring to Tables 1 and 2, since the separators of Examples 1 to 4 included the first water-soluble polymer and the second water-soluble polymer according to an exemplary embodiment as a binder, it was confirmed that the electrolyte decomposition reaction was effectively inhibited, heat shrinkage rates in MD and TD were 1.5% or less as measured after being allowed to stand at 150°C for 60 minutes, which means excellent heat resistance, and a strawboard adhesive strength was A, which means significantly improved adhesion, as compared with the separators of Comparative Examples 1 to 4. In addition, since the secondary batteries of Examples 1 to 4 included the separator according to an exemplary embodiment, it was confirmed that initial performance, life characteristics, and stability at a high temperature were all improved.

In addition, since the batteries of Examples 2 to 4 used 1 to 9 parts by weight of the first water-soluble polymer based on 100 parts by weight of the inorganic particles, they were confirmed to have better performance.

In addition, since Examples 3 and 4 used the second water-soluble polymer prepared by further including the hydroxyl group-containing (meth)acrylate-based monomer and/or polyfunctional (meth)acrylamide-based monomer in addition to the (meth)acrylamide-based monomer, as a binder, they showed better electrolyte decomposition inhibition characteristic, heat resistance, and adhesion, and the batteries to which the separators were applied also showed better initial performance, life characteristics, and stability at a high temperature,

However, Comparative Examples 1 and 2 did not use the sodium polyacrylate salt as a binder, and thus, were confirmed to have deteriorated heat resistance as compared with the examples, excessive occurrence of electrolyte decomposition by-products, and increased gassing due to electrolyte decomposition, so that the initial performance, the life characteristics, and the stability at a high temperature of the battery were deteriorated.

Comparative Examples 3 and 4 used the type of polymer other than the polyacrylamide-based polymer as the binder, and thus, were confirmed to have the initial performance, the life characteristics, and the stability at a high temperature of the secondary battery as well as the electrolyte decomposition inhibition characteristic, the heat resistance, and the adhesion of the separator which were all deteriorated as compared with the examples.

Since the separator according to an exemplary embodiment of the present disclosure includes a combination of specific water-soluble polymers, it may effectively inhibit the electrolyte decomposition reaction to improve performance of an electrochemical device, and also simultaneously, may secure excellent heat resistance and adhesion.

Since the electrochemical device according to an exemplary embodiment includes the separator described above, it may have a characteristic of decreased electrochemical device volume change, and also, have reduced resistance to have a significantly excellent life characteristic.

Hereinabove, although the present disclosure has been described by the specific matters and limited exemplary embodiments in the present specification, they have been provided only for assisting the entire understanding of the present disclosure, and the present disclosure is not limited to the exemplary embodiments, and various modifications and changes may be made by those skilled in the art to which the present disclosure pertains from the description.

## Claims

1. A separator comprising:

   a porous substrate; and
   an inorganic particle layer which is formed on at least one surface of the porous substrate and which includes a binder and inorganic particles,
   wherein the binder includes a first water-soluble polymer including a metal carboxylate group and a second water-soluble polymer based on (meth)acrylamide.

2. The separator of claim 1,

   wherein the first water-soluble polymer is one or more selected from the group consisting of polyacrylic acid metal salts, carboxymethylcellulose metal salts, and alginic acid metal salts, and
   the metal includes an alkali metal, an alkaline earth metal, or a combination thereof.

3. The separator of claim 1 or 2, wherein the first water-soluble polymer has a weight average molecular weight of 2,000 to 100,000 g/mol.

4. The separator of any one of claims 1 to 3, wherein 1 to 20 parts by weight of the first water-soluble polymer is included with respect to 100 parts by weight of the inorganic particles, preferably wherein 1 to 10 parts by weight of the first water-soluble polymer is included with respect to 100 parts by weight of the inorganic particles.

5. The separator of any one of claims 1 to 4, wherein the second water-soluble polymer is poly(meth)acrylamide or a copolymer including the same.

6. The separator of claim 5, wherein the copolymer is a copolymer based on one, two, or three monomer polymerization unit(s) selected from the group consisting of a (meth)acrylamide-based monomer polymerization unit; a hydroxyl group-containing (meth)acrylate-based monomer polymerization unit, and a polyfunctional (meth)acrylamide-based monomer polymerization unit,
   preferably wherein the copolymer is based on a (meth)acrylamide-based monomer polymerization unit, or the copolymer is based on a (meth)acrylamide-based monomer polymerization unit and a hydroxyl group-containing (meth)acrylate-based monomer polymerization unit, or the copolymer is based on a (meth)acrylamide-based monomer polymerization unit, a hydroxyl group-containing (meth)acrylate-based monomer polymerization unit and a polyfunctional (meth)acrylamide-based monomer polymerization unit.

7. The separator of any one of claims 1 to 6, wherein the second water-soluble polymer has a weight average molecular weight of 100,000 to 2,000,000 g/mol.

8. The separator of any one of claims 1 to 7, wherein 0.1 to 10 parts by weight of the second water-soluble polymer is included with respect to 100 parts by weight of the inorganic particles.

9. The separator of any one of claims 1 to 8, wherein heat shrinkage rates in MD and TD are 2% or less as measured after the separator is allowed to stand at 150°C for 60 minutes.

10. A method for manufacturing a separator, the method comprising:

    (S1) preparing a slurry composition including a binder and inorganic particles; and
    (S2) applying the slurry composition on at least one surface of a porous substrate to form an inorganic particle layer,
    wherein the binder includes a first water-soluble polymer including a metal carboxylate group and a second water-soluble polymer based on (meth)acrylamide.

11. The method for manufacturing a separator of claim 10,

    wherein a first water-soluble polymer including a metal carboxylate group is used which is defined in any one of claims 2 to 4; and/or
    wherein a second water-soluble polymer based on (meth)acrylamide is used which is defined in any one of claims

5 to 8.

**12.** An electrochemical device comprising the separator of any one of claims 1 to 9.

**13.** Use of a combination of binder materials including both a water-soluble polymer having a metal carboxylate salt as a functional group and a water-soluble (meth)acrylamide-based polymer in a separator for battery to inhibit electrolyte decomposition of the battery.

**14.** Use according to claim 13, wherein the inhibition of electrolyte decomposition is determined by measuring any produced decomposition product of the electrolyte represented by a phosphine by-product and/or by HF, preferably by measuring the produced HF, preferably wherein the HF content in said measurement is 300 ppm or lower.

**15.** Use according to claim 13 or 14, wherein a non-aqueous solvent used in the electrolyte includes one or more cyclic or linear carbonates, preferably without using an alkali metal salt as the electrolyte additive, more preferably without using any further additive.

Europäisches Patentamt
European Patent Office
Office européen des brevets

# EUROPEAN SEARCH REPORT

Application Number
EP 24 20 9660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 000 622 A (ZHEJIANG RENXINGDAO CHEMICAL CO LTD) 2 September 2022 (2022-09-02) | 1-6,8-15 | INV. H01M50/446 H01M10/052 H01M50/403 H01M50/42 H01M50/429 H01M50/431 H01M50/443 H01M50/449 |
| A | * claim all; examples 1-4 * | 7 | |
| X | US 2022/059903 A1 (KIM SUN YOUNG [KR] ET AL) 24 February 2022 (2022-02-24) | 1,3-15 | |
| A | * claim all * | 2 | |
| X | CN 116 914 373 A (YINGDE DONGFUGUI TECH MATERIAL CO LTD) 20 October 2023 (2023-10-20) | 1-6,8-15 | |
| A | * claim all; example 2 * | 7 | |

TECHNICAL FIELDS SEARCHED (IPC)

H01M

The present search report has been drawn up for all claims

| Place of search | Date of completion of the search | Examiner |
|---|---|---|
| Munich | 11 March 2025 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 24 20 9660

This annex lists the patent family members relating to the patent documents cited in the above-mentioned European search report. The members are as contained in the European Patent Office EDP file on
The European Patent Office is in no way liable for these particulars which are merely given for the purpose of information.

11-03-2025

| Patent document cited in search report | Publication date | Patent family member(s) | Publication date |
|---|---|---|---|
| CN 115000622 A | 02-09-2022 | NONE | |
| US 2022059903 A1 | 24-02-2022 | CN 114079123 A | 22-02-2022 |
| | | EP 3958364 A1 | 23-02-2022 |
| | | US 2022059903 A1 | 24-02-2022 |
| CN 116914373 A | 20-10-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190386338 A